# EUROPÄISCHE PATENTSCHRIFT

(11) **EP 2 655 222 B1**
(45) Veröffentlichungstag und Bekanntmachung des Hinweises auf die Patenterteilung: **28.01.2015**
(21) Anmeldenummer: 11813875.9
(22) Anmeldetag: 23.12.2011
(51) Int. Cl.: B65G 1/137

(54) **TABLAR-HANDHABUNGSSTATION UND VERFAHREN ZUM MANUELLEN BE- UND ENTLADEN VON TABLAREN**
TRAY HANDLING STATION AND METHOD FOR MANUALLY LOADING AND UNLOADING TRAYS
POSTE DE MANUTENTION DE TABLETTES ET PROCÉDÉ POUR LE CHARGEMENT ET LE DÉCHARGEMENT MANUEL DE TABLETTES

(30) Priorität: 23.12.2010 DE 102010056520
(43) Veröffentlichungstag der Anmeldung: 30.10.2013
(73) Patentinhaber: SSI Schäfer Noell GmbH Lager-und Systemtechnik, 97232 Giebelstadt (DE)
(72) Erfinder: ISSING, Elmar, 97232 Giebelstadt (DE)
(74) Vertreter: Witte, Weller & Partner Patentanwälte mbB
(86) Internationale Anmeldenummer: PCT/EP2011/073955
(87) Internationale Veröffentlichungsnummer: WO 2012/085271

(56) Entgegenhaltungen:
- EP-A1- 0 583 859
- WO-A1-98/06646
- WO-A1-2008/022767

## Beschreibung

Die vorliegende Erfindung betrifft eine Tablar-Handhabungsstation zum manuellen Be- oder Entladen von Stückgütern auf ein oder von einem Tablar, insbesondere auf ein bzw. von einem Lagentablar, wobei die Tablar-Handhabungsstation an eine Packstation oder an eine Stückgut-Fördertechnik angrenzt.

Eine Tablar-Handhabungsstation gemäß dem Oberbegriff des Anspruchs 1 ist in der WO 98/06646 A1 gezeigt.

Des Weiteren betrifft die vorliegende Erfindung ein Verfahren zum Be- oder Entladen eines Stückguts auf ein oder von einem Tablar in einem Lager- und Kommissioniersystem mit einer Tablar-Handhabungsstation zur manuellen Handhabung der Stückgüter.

In jüngster Zeit ist man bei der Kommissionierung von Stückgütern, insbesondere im Bereich des Lebensmittelhandels, dazu übergegangen, die zu kommissionierenden Stückgüter hinsichtlich eines Materialflusses im Kommissionier System lagenweise, und vorzugsweise auch sortenrein, zu handhaben. Sortenreine Palettenlagen bestehend aus einer Vielzahl von Stückgütern des gleichen Typs bzw. der gleichen Sorte werden von Wareneingangspaletten schichtweise depalettiert und auf Tablare umgesetzt. Derartige Lagentablare werden in Tablarlager eingelagert und zum Zwecke einer Kommissionierung ausgelagert, wie man es aus der Behälterkommissionierung kennt. Derartige Systeme werden in den Dokumenten DE 10 2006 025 620 A1, DE 10 2006 025 619 A1, DE 10 2006 025 617 A1 und DE 10 2006 025 618 A1 beschrieben.

Häufig wird ein Automatisierungsgrad von 100 % angestrebt. Zu diesem Zweck werden die Lagentablare automatisiert be- und entladen sowie die Stückgüter vereinzelt. Diese Stückgüter werden dann wiederum automatisiert, z.B. mittels Packrobotern, auf Versandträgern (z.B. Paletten) zu neuen Stückgutstapeln zusammengestellt. Vereinzelungsvorgänge sind exemplarisch in den Dokumenten DE 10 2006 039 697 A1 und WO 2010/090515 beschrieben.

Neben einer hundertprozentigen Automatisierung eines Lager- und Kommissioniersystems besteht aber weiterhin der Bedarf, einzelne Schritte auch manuell ausführen zu können. Dies betrifft im Besonderen das Entladen und Beladen der (Lagen-)Tablare und das Bilden von Stückgutstapeln (Packen) auf den Versandträgern. Wenn die Tablare aber sehr große Dimensionen aufweisen, die zur Aufnahme einer Palettenlage oder von Stückgutreihen oder Ähnlichem geeignet sind, wobei die Stückgüter selbst groß und schwer sein können, sind die damit verbundenen Arbeitsschritte für den Kommissionierer körperlich oft sehr anstrengend.

Ferner gibt es besonders in den nordeuropäischen Ländern strenge Vorschriften zur Ergonomie von Arbeitsplätzen mit manueller Handhabung von Stückgütern im Bereich der Kommissionierung.

Daher stellt sich u.a. die Aufgabe, einen Tablar-Arbeitsplatz zur Handhabung derartig großer Tablare bereitzustellen, an dem der Kommissionierer die Stückgüter manuell entlädt und gegebenenfalls Auftragsträger bzw. Versandträger manuell belädt. Die strengen ergonomischen Richtlinien sind dabei zu beachten.

Diese Aufgabe wird durch eine Tablar-Handhabungsstation zum manuellen Be- oder Entladen von Stückgütern auf ein oder von einem Tablar gelöst, wobei die Tablar-Handhabungsstation an eine Packstation oder an eine Stückgut-Fördertechnik gekoppelt ist, wobei der Arbeitsbereich so dimensioniert ist, dass ein Kommissionierer bei einer Entnahme eines Stückguts von dem zu handhabenden Tablar, das sich auf der als Entnahmeposition dienenden Handhabungsposition befindet, das zu entnehmende Stückgut allein durch eine Bewegung seines Oberkörpers von dem zu handhabenden Tablar über eine Gleitfläche der Gleitflächeneinheit, die in der Handhabungsebene liegt, ohne Heben in einen Abgabebereich bewegt, der im Arbeitsbereich liegt und der die Packstation oder die Stückgut-Fördertechnik zumindest teilweise überlappt; und wobei vorzugsweise eine Kippeinrichtung vorgesehen ist, die das zu handhabende Tablar oder das zu entnehmende Stückgut derart relativ zu einer im Wesentlichen horizontal orientierten Hauptförderebene neigt, dass der Kommissionierer das zu entnehmende Stückgut über die Gleitfläche der Gleitflächeneinheit im Wesentlichen stufenlos von dem zu handhabenden Tablar in den Abgabebereich schieben und/oder ziehen kann.

Der Arbeitsplatz gemäß der Erfindung zeichnet sich durch eine hohe Ergonomie aus. Der Kommissionierer muss eigentlich keine Lasten heben. Beim Umsetzen der Stückgüter wird der Kommissionierer durch die Gleitfläche unterstützt. Der Kommissionierer kann im Falle schräggestellter Tablare die zu handhabenden Stückgüter gut überblicken. Der Kommissionierer schiebt oder zieht die umzusetzenden Stückgüter von einem Startpunkt zu einem Zielpunkt. Die Gleitfläche verbindet den Startpunkt mit dem Zielpunkt. Der Kommissionierer muss beim Umsetzen der Stückgüter eigentlich nicht laufen. Es reicht aus, wenn er seinen Oberkörper leicht dreht.

Bei einer bevorzugten Ausgestaltung weist eine Kippeinrichtung eine Ankippeinrichtung und eine Rückkippeinrichtung auf, die in die Tablar-Fördertechnik derart integriert sind, dass sie vorzugsweise stromaufwärts und stromabwärts relativ zur Handhabungsposition angeordnet sind.

Diese Maßnahme gewährleistet, dass die Tablare nicht erst im Arbeitsbereich des Kommissionierers gekippt werden, sondern bereits gekippt in den Arbeitsbereich gelangen. Auch das Rückkippen erfolgt außerhalb des Arbeitsbereichs des Kommissionierers. Die Tablare "fließen" in diesem Sinne getaktet am Kommissionierer vorbei. Dies erhöht die Kommissionierleistung, indem die Zykluszeit für einen Austausch von Tablaren reduziert wird.

Ferner ist es von Vorteil, wenn ein Boden des zu handhabenden Tablars gegenüber der Hauptförderebene derart geneigt ist, dass die auf diesem Tablar befindlichen Stückgüter zu dem Kommissionierer hin rutschen.

Der Kommissionierer muss sich dann nicht strecken, um solche Stückgüter umsetzen zu können, die sich möglicherweise außerhalb seines Arbeitsbereichs befinden. Diese Stückgüter rutschen automatisch in den Arbeitsbereich, wo der Kommissionierer sie ohne Probleme greifen und umsetzen kann.

Bei einer weiteren bevorzugten Ausgestaltung weist die Kippeinrichtung ferner eine heb- und senkbare Rampe auf, die das zu handhabende Tablar durchgreift und entgegengesetzt zum Tablar geneigt ist.

Die Rampe ist besonders bei Tablaren mit einem hohen, umlaufenden Rand hilfreich. Die Rampe ermöglicht eine Entnahme von Stückgütern aus den Tablaren, ohne dass die Stückgüter dazu vom Kommissionierer angehoben werden müssen, um die Höhendifferenz zwischen dem Tablarboden und einer Oberkante des Tablarrands zu überwinden.

Insbesondere weist die Kippeinrichtung eine Rollenanordnung auf, die eine Transportebene definiert und die einen Boden des zu handhabenden Tablars derart durchgreift, dass die Transportebene gegenüber der Hauptförderebene geneigt ist.

Durch diese Maßnahme ist gewährleistet, dass auch solche Stückgüter, die in einem hinteren Bereich des Tablars angeordnet sind, der außerhalb eines Kerns des Arbeitsbereichs liegt, ohne Heben auf die Gleitflächeneinheit bewegt werden können. Die Rollenanordnung stellt eine Art Rampe dar, die zum Überwinden des umlaufenden Rands eingesetzt wird.

Vorzugsweise koppelt die Gleitflächeneinheit bündig an die Tablar-Fördertechnik sowie an die Stückgut-Fördertechnik oder Packstation an.

Eine bündige Verbindung zwischen der Tablar-Fördertechnik und der Gleitflächeneinheit verhindert eine Spaltbildung zwischen diesen Komponenten. Spalte sind nachteilig, weil die umzusetzenden Stückgüter dort unter Umständen hängen bleiben.

Weiter ist es bevorzugt, wenn die Gleitflächeneinheit zwei Schenkel aufweist, die einen Winkel von ungefähr 10° bis ungefähr 170° einschließen.

Die Tablar-Fördertechnik und die Stückgut-Fördertechnik können so in nahezu beliebigen Winkeln aneinanderkoppeln. Die Gleitflächeneinheit lässt sich mit ihren Schenkeln problemlos zwischen den beiden Fördertechniken anordnen.

Insbesondere weist die Gleitflächeneinheit eine Schürze auf, die im Wesentlichen vertikal angeordnet ist und die vorzugsweise bündig mit einer Kante der Gleitfläche abschließt, die dem Kommissionierer zugewandt ist.

Bei einer derartigen Anordnung werden in Richtung des Kommissionierers vorstehende Kanten vermieden. Der Kommissionierer kann sich nicht an der Gleitflächeneinheit stoßen. Das Verletzungsrisiko wird minimiert. Höchste ergonomische Anforderungen sind erfüllt.

Bei einer weiteren bevorzugten Ausführungsform fällt die Gleitfläche (Handhabungsebene) von der Tablar-Fördertechnik in Richtung der Stückgut-Fördertechnik oder der Packstation ab.

Somit gibt es ein Gefälle zwischen den Elementen, zwischen denen die Stückgüter umgesetzt werden müssen. Bei einem Umsetzen der Stückgüter von der Tablar-Fördertechnik hin zur z.B. Stückgut-Fördertechnik wird der Kommissionierer durch die Schwerkraft unterstützt. Er muss wenig Kraft aufwenden, um die Stückgüter zu ziehen und/oder zu schieben.

Weiter ist es von Vorteil, wenn die Tablar-Fördertechnik zumindest im Arbeitsbereich getaktet fortbewegt wird und wenn die Handhabungsposition durch einen Abschnitt der Tablar-Fördertechnik definiert ist, wo das zu handhabende Tablar während einer Entnahme oder Abgabe eines Stückguts in Ruhe ist.

Vorzugsweise hat jedes Tablar einen umlaufenden Rand.

Damit ist sichergestellt, dass die Stückgüter nicht seitlich von einer Transportfläche (Tablarboden) des Tablars rutschen.

Außerdem ist es von Vorteil, wenn jedes Tablar zur Aufnahme einer Palettenlage oder einer Palettenreihe von Stückgütern eingerichtet ist.

Gemäß einem weiteren Aspekt der Erfindung wird ein Lager- und Kommissioniersystem mit einem Tablarlager und einer Tablar-Handhabungsstation gemäß der Erfindung vorgeschlagen.

Die obige Aufgabe wird ferner durch ein Verfahren gemäß Anspruch 14 gelöst.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine perspektivische Ansicht eines Lager- und Kommissioniersystems mit einer Tablar-Handhabungsstation gemäß der Erfindung;
- Fig. 2: eine Draufsicht auf eine Tablar-Handhabungsstation gemäß der Erfindung;
- Fig. 3: eine erste Seitenansicht der Tablar-Handhabungsstation der Fig. 2;
- Fig. 4: eine zweite Seitenansicht der Tablar-Handhabungsstation der Fig. 2;
- Fig. 5: eine perspektivische Ansicht einer weiteren Tablar-Handhabungsstation gemäß der Erfindung;
- Fig. 6: eine Draufsicht auf ein weiteres Lager- und Kommissioniersystem mit einer weiteren Tablar-Handhabungsstation gemäß der Erfindung;
- Fig. 7: eine perspektivische Ansicht einer weiteren Abwandlung einer Tablar-Handhabungsstation gemäß der Erfindung;
- Fig. 8: eine schematisierte Seitenansicht einer ersten Kippeinrichtung;
- Fig. 9: eine schematisierte Seitenansicht einer zweiten Kippeinrichtung;
- Fig. 10: eine schematisierte Seitenansicht einer dritten Kippeinrichtung;
- Fig. 11: eine schematisierte Seitenansicht einer alternativen Rutsche; und
- Fig. 12: ein Flussdiagramm eines Verfahrens gemäß der Erfindung.

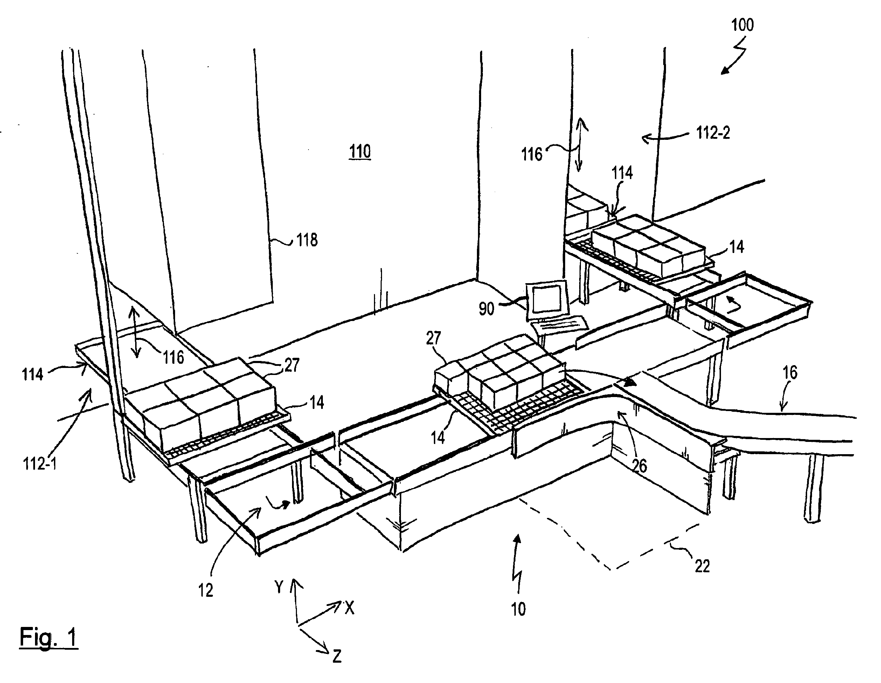

Fig. 1 zeigt eine perspektivische Ansicht eines Lager- und Kommissioniersystems 100 (nachfolgend auch kurz "System" genannt) mit einer erfindungsgemäßen Tablar-Handhabungsstation 10, die nachfolgend auch kurz als "Station" 10 bezeichnet werden wird.

Das System 100 umfasst ein Tablarlager 110, an dessen Längsseite (oder an dessen nicht dargestellter Stirnseite) ein oder mehrere Vertikallifte 112 direkt angeschlossen sind. In der Fig. 1 sind zwei Vertikallifte 112-1 und 112-2 gezeigt, die jeweils mindestens ein Lastaufnahmemittel 114 aufweisen, mit denen Tablare 14 (ausschließlich) vertikal transportiert und in Querrichtung ausgetauscht werden können. Die Vertikale erstreckt sich in der Fig. 1 entlang der Y-Achse. Die Querrichtung erstreckt sich in der Fig. 1 entlang der Z-Achse. Die Längsrichtung erstreckt sich in der Fig. 1 entlang der X-Achse. Die Lifte koppeln direkt an das Tablarlager 110 an und sind stationär angeordnet. Für weiterführende Erklärungen, wie das System 100 aufgebaut ist, wird auf die deutsche Patentanmeldung DE 10 2006 025 620 A1 verwiesen, die am 24.05.2006 eingereicht wurde und auf deren Inhalt in vollem Umfang Bezug genommen wird.

Der linke Lift 112-1 verfügt des Weiteren exemplarisch über ein so genanntes Rucksacklager 118, das dem Tablarregal 110 gegenüberliegend angeordnet ist, so dass das Lastaufnahmemittel 114 Tablare 14 entweder mit dem Tablarlager 110 oder dem Rucksacklager 118 austauschen kann. Natürlich können auch keiner, einige oder alle Lifte 112 ein Rucksacklager 118 aufweisen.

Die Lastaufnahmemittel 114 der beiden Lifte 112-1 und 112-2 sind jeweils in einer Übergabeposition gezeigt, wo die Lastaufnahmemittel 114 Tablare 14 mit einer Tablar-Fördertechnik 12 austauschen können. Die Tablar-Fördertechnik 12 ist hier in Form eines Riemenförderers ausgebildet. Es versteht sich, dass andere Fördertechniktypen, wie z.B. Rollenförderer, Kettenförderer oder Ähnliches, anstatt eines Riemenförderers eingesetzt werden können. Die Fördertechnik 12 eignet sich zum Transport von beladen en Tablaren 14 mit Gesamtgewichten von jeweils bis zu 250 kg und mehr. Die Tablar-Fördertechnik 12 ist aber so zu wählen, dass auch so genannte Lagentablare gefördert werden können. Ein Lagentablar ist üblicherweise mit einer Palettenlage bestehend aus einer Vielzahl von Stückgütern 27 beladen. Die Stückgüter 27 sind vorzugsweise sortenrein vorgesehen, d.h. eine Palettenlage besteht aus einer Vielzahl von Stückgütern eines identischen Typs. Die Palettenlagen werden durch schichtweises Depalettieren von (sortenreinen) (Wareneingangs-)Paletten und Umsetzen der depalettierten Palettenlagen auf die Tablare 14 erzeugt. Für weiterführende Details zur Erzeugung und Handhabung von Palettenlagen in einem Lager- und Kommissioniersystem wird auf die deutsche Patentanmeldung DE 10 2006 025 618 A1 verwiesen, auf die hier in vollem Umfang Bezug genommen wird. Es versteht sich, dass die Tablare 14 alternativ auch mit kleineren Untereinheiten einer Palettenlage, wie z.B. einer Stückgutreihe, bestückt sein können.

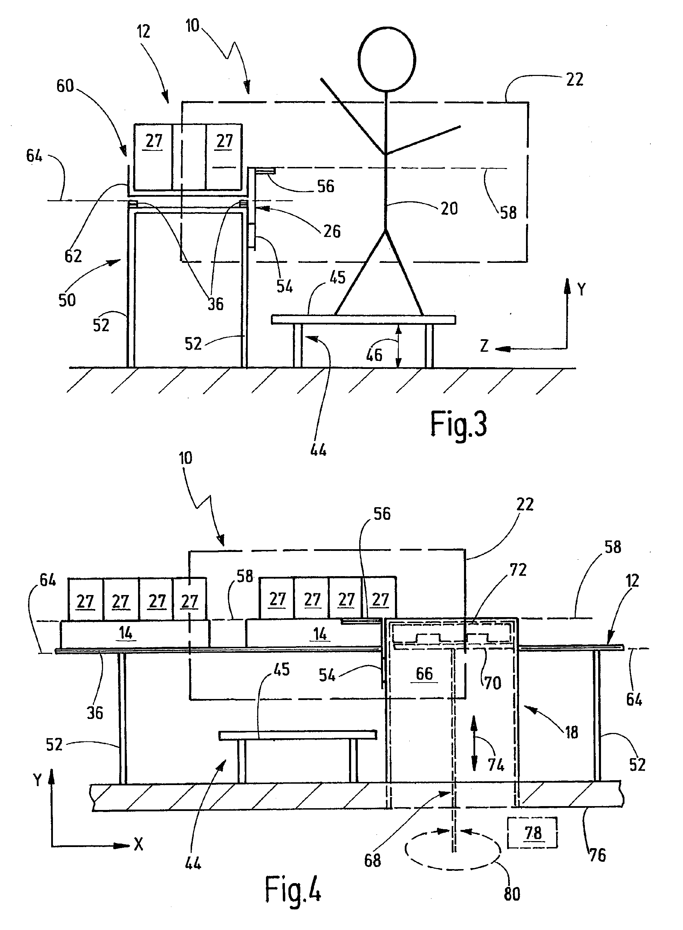

Die Tablare 14 werden üblicherweise aus Metall hergestellt, weisen einen mit Öffnungen versehenen Boden sowie einen umlaufenden Rand 62 (vgl. auch Fig. 3) auf und sind dazu geeignet, Lasten von bis zu 250 kg und mehr zu tragen. Eine Grundfläche der Tablare 14 entspricht vorzugsweise einer Grundfläche der Wareneingangspaletten.

Zurückkehrend zu Fig. 1 gibt der erste Lift 112-1 beispielsweise volle oder teilweise beladene Tablare 14 an die Tablar-Fördertechnik 12 ab. Die Tablar-Fördertechnik 12 fördert die Tablare 14 (getaktet) zur Station 10, wo manuell Stückgüter 27 entnommen und beispielsweise auf eine Stückgut-Fördertechnik 16 überführt werden, wie es in der Fig. 1 hilfsweise durch einen nicht näher bezeichneten Pfeil angedeutet ist. Die zu entnehmende Stückzahl bekommt der in Fig. 1 nicht dargestellte Kommissionierer 20 über eine Anzeige 90 angezeigt, wie sie in der Fig. 1 exemplarisch in Form eines Computers mit Bildschirm angedeutet ist. Nach einer abgeschlossenen Entnahme von Stückgütern 27 wird das Tablar 14 in Richtung des zweiten Lifts 112-2 gefördert, der das leere oder noch teilweise volle Tablar 14 in das Tablarlager 110 zurücklagert.

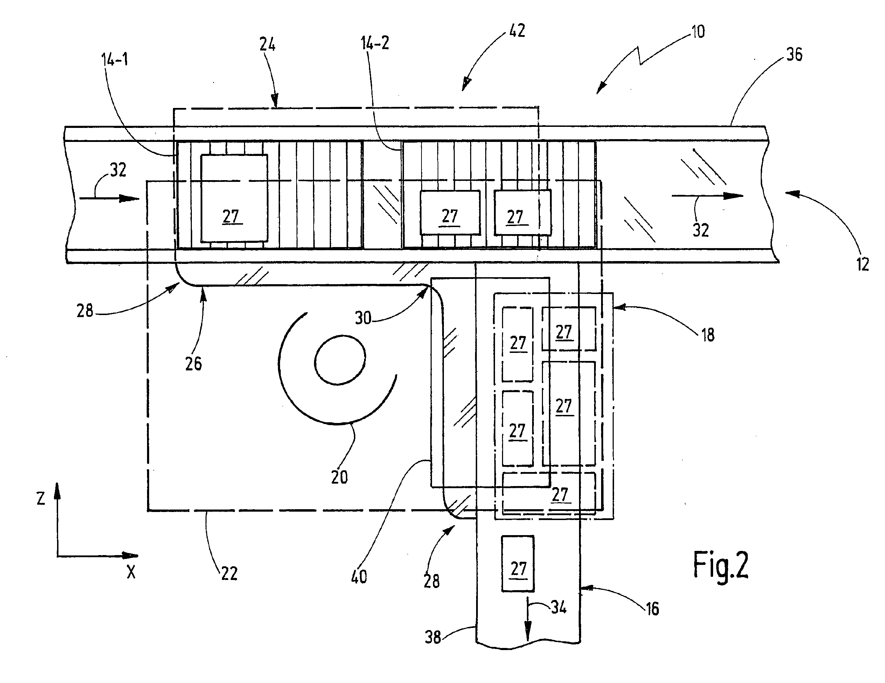

Es versteht sich, dass anstelle der Stückgut-Fördertechnik 16 auch eine Packstation 18 vorgesehen sein kann, wie sie in Fig. 2 mit einer strichpunktierten Linie angedeutet ist. Ferner versteht es sich, dass mit der Station 10 nicht nur Stückgüter 27 von Tablaren 14 entnommen werden können, sondern dass Stückgüter 27 auch auf die Tablare 14 geladen werden können, indem man den Materialfluss umkehrt. Dies ist besonders dann von Vorteil, wenn die Stationen 10 in Zeiten geringer Auslastung Kommissionier-Leerlaufphasen haben. In diesen Leerlaufphasen können die Stationen 10 zum Einlagern von Stückgütern 27 bzw. zum Nachfüllen des Tablarlagers 110 mit Stückgütern 27 eingesetzt werden. Alle Schritte werden generell von einer übergeordneten Steuerung (Materialflussrechner, Lagerverwaltungsrechner, etc.) überwacht, gesteuert und koordiniert.

Bezug nehmend auf Fig. 2 ist eine schematisierte Darstellung der Tablar-Handhabungsstation 10 der Fig. 1 gezeigt.

Die Station 10 wird über die Tablar-Fördertechnik 12 mit Tablaren 14 versorgt (Förderrichtung 32). Bei den in der Fig. 2 gezeigten Tablaren 14-1 und 14-2 handelt es sich um so genannte "Lattentablare", wohingegen in Fig. 1 so genannte "Gittertablare" gezeigt sind. Die Öffnungen in den Böden der Tablare 14 dienen einem Durchgriff von Handhabungseinheiten, wie z.B. einer Vereinzelungseinrichtung, wie sie in der deutschen Patentanmeldung DE 10 2006 039 697 A1 gezeigt ist. Die Form, Anzahl und Gestalt der Ausnehmungen ist kundenspezifisch wählbar. Alternativ können Tablare 14 eingesetzt werden, deren Böden aushebbar ausgestaltet sind, d.h. die Böden liegen lose in einem umlaufenden Rahmen des Tablars 14, der dann den Rand 62 des Tablars 14 bildet.

Alternativ zur Stückgut-Fördertechnik 16, über die beispielsweise entladene Stückgüter 27 in einer Förderrichtung 34 von der Station 10 weg befördert werden können, können eine oder mehrere Packstationen 18 in einer unmittelbaren Umgebung eines Arbeitsbereichs 22 eines Kommissionierers 20 angeordnet sein. Eine Packstation 18 ist in der Fig. 2 mit einer strichpunktierten Linie angedeutet und weist üblicherweise mehrere Seitenwände auf, die als Stapeltrichter eingesetzt werden. Innerhalb der Packstation 18 wird ein Versandträger, wie z.B. eine Europool-Palette, bereitgestellt, auf die entnommene Stückgüter 27 geladen werden. Der Versandträger, der auch Auftragsträger genannt wird, wird schrittweise abgesenkt, während der Kommissionierer 20 einen aus entladenen Stückgütern 27 bestehenden Stapel auf dem Versandträger bildet. Eine entsprechende Hubeinrichtung, die in Fig. 2 nicht gezeigt ist, ist dazu auf einem unterhalb der Station 10 gelegenen Niveau vorgesehen (vgl. Fig. 4).

Nachfolgend wird exemplarisch ein Kommissioniervorgang beschrieben werden, bei dem die Stückgüter 27 von den Tablaren 14 manuell entnommen werden.

Die Tablar-Fördertechnik 12 fördert dazu Tablare 14 in der Förderrichtung 32 in den Arbeitsbereich 22 des Kommissionierers 20 hinein. Die Tablare 14 stehen hier z.B. auf Riemen 36 eines Riemenförderers. Die Tablare 14 werden von der Tablar-Fördertechnik 12 in eine Handhabungsposition 24 transportiert. Die Handhabungsposition 24 kann ein oder mehrere Tablare 14 aufnehmen und stellt einen Bereich dar, wo die Tablare 14 zur Entnahme oder Abgabe von Stückgütern 27 zeitweise geparkt werden. In der Fig. 2 ist die Handhabungsposition 24 von einer Strichlinie umrandet und umfasst ca. eineinhalb Tablare 14. Die Handhabungsposition 24 überlappt sich mit dem Arbeitsbereich 22, der in der Fig. 2 ebenfalls von einer Strichlinie umrandet ist und der im Wesentlichen durch einen Bewegungsraum des Kommissionierers 20 definiert ist.

Der Arbeitsbereich 22 ist in Fig. 2 mit einer rechteckigen Grundfläche angedeutet. Es versteht sich, dass der Arbeitsbereich 22 eine beliebig geformte Kontur aufweisen kann. Die Größe der Grundfläche des Arbeitsbereichs 22 ist so gewählt, dass der Kommissionierer 20 Stückgüter 27 gut von den Tablaren 14-1 und 14-2 nehmen kann, möglichst ohne zu laufen und ohne sich zu strecken. Üblicherweise wird die Kontur des Arbeitsbereichs 22 durch die Reichweite der Arme des Kommissionierers 20 definiert. Da der Kommissionierer 20 beim Entnehmen von Stückgütern 27, aber auch beim Beladen der Tablare 14 mit Stückgütern 27, eigentlich nicht läuft, sondern im Wesentlichen allein seinen Oberkörper bewegt, erfüllt die Station 10 die höchsten ergonomischen Anforderungen.

Es versteht sich, dass der Arbeitsbereich 22 ein dreidimensionaler Raum ist, von dem in der Fig. 2 lediglich die Grundfläche zu sehen ist.

Die Station 10 ist vorzugsweise so ausgestaltet, dass der Kommissionierer 20 beim Umsetzen von Stückgütern 27 keine Lasten heben, d.h. insbesondere anheben, muss. Wie es nachfolgend im Detail noch erläutert werden wird, ist dazu eine Gleitflächeneinheit 26 vorgesehen. Die Gleitflächeneinheit 26 ist in der Ausführung der Fig. 2 L-förmig ausgebildet und zwischen der Tablar-Fördertechnik 12 und der Stückgut-Fördertechnik 16 angeordnet. Die Gleitflächeneinheit 26 grenzt direkt an die Fördertechniken 12 und 16 an. Die Ecken der Gleitflächeneinheit sind abgerundet, wie es durch Pfeile 28 und 30 angedeutet ist. Es versteht sich, dass die Form der Gleitflächeneinheit 26 an die relative Anordnung der Fördertechniken 12 und 16 bzw. die relative Anordnung der Tablar-Fördertechnik 12 und einer Packstation 18 angepasst ist (hier 90°). Ferner versteht es sich, dass zwischen der Gleitflächeneinheit 26 und den materialflusstechnisch miteinander zu verbindenden Komponenten (12, 14, 16) kleinere Spalte zulässig sind, solange die umzusetzenden Stückgüter 27 dort nicht hängen bleiben.

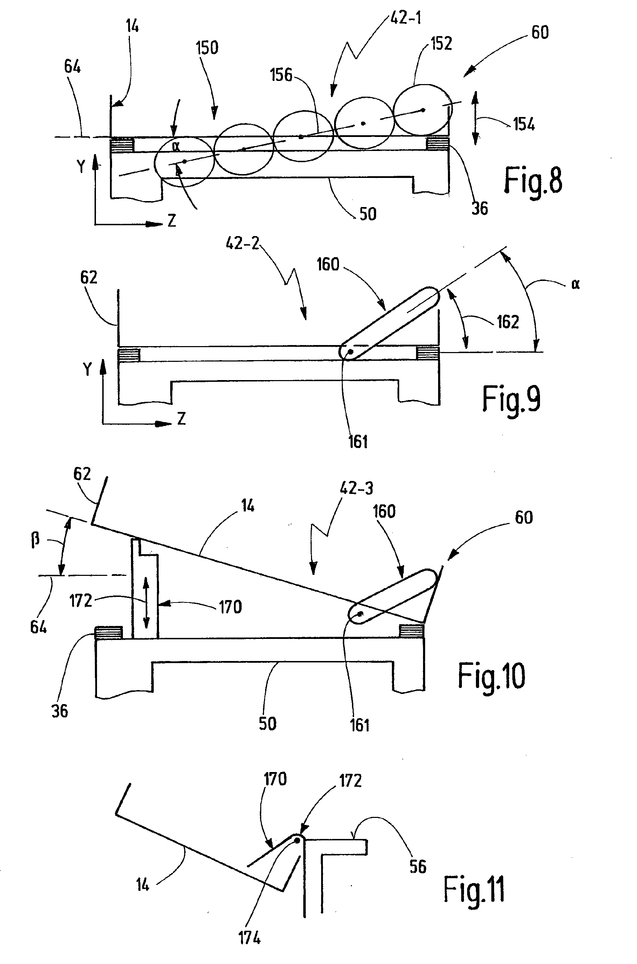

Des Weiteren kann die Station 10 eine in der Fig. 2 nicht näher dargestellte Kippeinrichtung 42 umfassen. Mit der Kippeinrichtung 42 können die Tablare 14 oder die Stückgüter 27 so relativ zueinander geneigt werden, dass der Kommissionierer 20 die Stückgüter 27 problemlos über einen umlaufenden Rand 62 des Tablars 14 schieben oder ziehen kann, ohne das Stückgut 27 anheben zu müssen (vgl. Fig. 8-10). Dies wird nachfolgend noch genauer erläutert werden.

Sobald der Kommissionierer 20 ein Stückgut 27 im Bereich der Handhabungsposition 24 gegriffen hat, zieht er dieses Stückgut 27 auf die Gleitflächeneinheit 26 und schiebt das Stückgut 27 in Richtung eines Abgabebereichs 40, der sich zumindest teilweise mit der Stückgut-Fördertechnik 16 bzw. der Packstation 18 überlappt und der innerhalb des Arbeitsbereichs 22 liegt. Man beachte, dass die Handhabungsposition 24 nicht vollständig innerhalb des Arbeitsbereichs 22 liegen muss. So kann z.B. durch die Kippeinrichtung 42 gewährleistet werden, dass sich solche Stückgüter 27, die außerhalb des Arbeitsbereichs 22 auf den Tablaren 14 liegen, nach einer Entnahme solcher Stückgüter 27, die innerhalb des Arbeitsbereichs 22 liegen, aufgrund von Schwerkraft in den Arbeitsbereich 22 bewegen. Die auf dem Tablar 14 betroffenen Oberflächen können dazu entsprechend ausgebildet sein.

Die Oberfläche der Tablare 14 kann eine derartige Rauheit aufweisen, dass sich beim Herunterziehen der Stückgüter 27 Luftkissen zwischen den Stückgütern 27 und einer Oberfläche des Tablarbodens bilden, die die Reibung reduzieren.

Es ist bevorzugt, wenn die Bewegung des Stückguts 27 von dem oder auf das Tablar 14 stufenlos erfolgt. Stufenlos bedeutet in diesem Zusammenhang, dass der Kommissionierer 20 das Stückgut 27 nicht heben muss, d.h. sprungartig nicht parallel zur Y-Achse bewegen muss. Es ist aber zulässig, dass die Stückgüter 27 beim Umsetzen nach unten fallen dürfen. Hierbei verrichtet der Kommissionierer 20 keine Arbeit, d.h. er muss das Stückgut 27 nicht heben. Wenn der Kommissionierer 20 beispielsweise Stückgüter 27 von einem der Tablare 14-1 oder 14-2 entnimmt, über die Gleitflächeneinheit 26 zieht und in Richtung des Abgabebereichs 40 bewegt, wo ein zu beladender Versandträger in einer Packstation 18 bereitgestellt ist, kann es vorkommen, dass der Versandträger oder Stückgüter 27, die bereits auf den Versandträger geladen wurden, tiefer als die Gleitflächeneinheit 26 liegen, so dass die Stückgüter 27 im Bereich des Versandträgers nach unten fallen oder kippen. Trotzdem erfolgt die Bewegung in diesem Fall "stufenlos" im Sinne der Erfindung.

Bezug nehmend auf Fig. 3 blickt man in der positiven X-Richtung seitlich auf die Station 10 der Fig. 1.

Je nach Größe des Kommissionierers 20 (Mann oder Frau) kann ein Podest 44 innerhalb des Arbeitsbereichs 22 zum Einsatz kommen, das vorzugsweise höhenverstellbar ist, wie es durch einen Doppelpfeil 46 angedeutet ist. Der Kommissionierer 20 steht dann auf einer Standfläche 45 des Podests 44. Die Standfläche 45 ist so dimensioniert, dass sich der Kommissionierer 20 gut innerhalb des Arbeitsbereichs 22 bewegen kann. Der Kommissionierer 20 darf dabei auch laufen. Eine Höhe des Podests 44 wird so gewählt, dass der Kommissionierer 20 die Stückgüter 27 auf einer Höhe angedient bekommt, auf der der Kommissionierer 20 gut arbeiten kann, ohne sich bücken zu müssen oder die Stückgüter 27 heben zu müssen. Die einzustellende Höhe des Podests 44 hängt des Weiteren von einer Höhe der Tablar-Fördertechnik 12 ab.

Die Tablar-Fördertechnik 12 kann ein Gestell 50 mit Beinen 52 aufweisen. Auf einer Oberseite des Gestells 50 können die (Transport-)Riemen 36 angeordnet sein, die die Tablare 14 tragen. Aus Gründen einer besseren Übersichtlichkeit ist die Kippeinrichtung 42 der Fig. 2 in der Fig. 3 nicht dargestellt. Gleiches gilt für die Stückgut-Fördertechnik 16 bzw. die Packstation 18, deren oberer Rand jedoch vorzugsweise in Höhe einer Handhabungsebene 58 angeordnet ist, die in der Fig. 3 durch eine Strichlinie angedeutet ist.

Die Handhabungsebene 58 ist vorzugsweise horizontal orientiert, d.h. sie liegt in der XZ-Ebene. In diesem Fall ist die Handhabungsebene 58 eine Ebene ohne Hebungen und Senkungen. Die Handhabungsebene 58 kann aber auch gegenüber der Horizontalen (xz-Ebene) geneigt sein und in Richtung des Abgabebereichs 40 Senken - aber keine Erhebungen - aufweisen.

Eine Lage der Handhabungsebene 58 wird unter anderem durch die Gleitflächeneinheit 26 definiert. Die Gleitflächeneinheit 26 weist z.B. eine horizontal orientierte Gleitfläche 56 und eine vertikal orientierte Schürze 54 auf. Die Gleitfläche 56 und die Schürze 54 schließen hier einen rechten Winkel miteinander ein, wobei die Gleitfläche 56 in Richtung des Kommissionierers 20 vorsteht. Es versteht sich, dass die Schürze 54 auch derart in Richtung des Kommissionierers 20 versetzt sein kann, dass es keine vorstehenden oder überhängenden Kanten gibt, an denen sich der Kommissionierer 20 verletzen könnte. Die Oberseite der Gleitfläche 56 schließt vorzugsweise bündig mit einer Oberkante 60 des umlaufenden Rands 62 der Tablare 14 ab. Wie es nachfolgend noch erläutert werden wird, werden entweder die Stückgüter 27 oder das Tablar 14 so relativ zu einer Hauptförderebene 64, die parallel zur Horizontalen (XZ-Ebene) orientiert ist, gekippt, dass die Stückgüter 27 nicht angehoben werden müssen, um von den Tablaren 14 in Richtung des Abgabebereichs 40 (vgl. Fig. 2) bewegt zu werden. Die Situation, wie sie in der Fig. 3 für die Stückgüter 27 dargestellt ist, stellt eine Stufe im Sinne der vorliegenden Beschreibung dar.

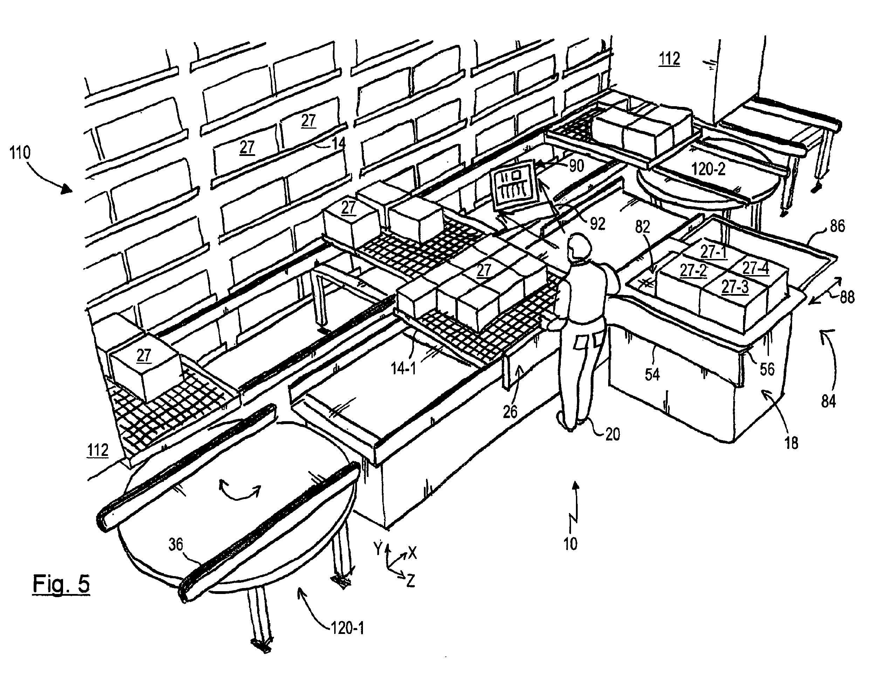

Die Handhabungsebene 58 liegt vorzugsweise in einem Bereich, der die Hüfte und den Bauch des Kommissionierers 20 umfasst. Die Handhabungsebene 58 liegt insbesondere auf einer Höhe, die durch rechtwinklig angewinkelte Unterarme definiert ist (vgl. Fig. 5).

Des Weiteren erkennt man in Fig. 3, dass sich der Arbeitsbereich 22 auch in der Höhenrichtung (Y-Richtung) erstreckt. Der Arbeitsbereich bzw. Arbeitsraum 22 ist derart dimensioniert, dass der Kommissionierer 20 zumindest seine Arme gut darin bewegen kann, indem sich der Kommissionierer 20 z.B. leicht um seine Längsachse (Y-Achse) dreht.

Bezug nehmend auf Fig. 4 ist eine weitere Seitenansicht der Station 10 der Fig. 2 und 3 gezeigt, wobei der Kommissionierer 20 in der Fig. 4 nicht dargestellt ist und anstatt der Stückgut-Fördertechnik 16 die Packstation 18 exemplarisch gezeigt ist.

Die Packstation 18 ist halbtransparent dargestellt, so dass man einen inneren (Pack-)Schacht 66 erkennen kann. Der Schacht 66 wird durch eine oder mehrere Außenwände der Packstation 18 definiert und ist so dimensioniert, dass ausreichend Raum zur Aufnahme einer Hubeinrichtung 68 vorhanden ist, die einen Hubtisch 70 aufweist. Der Hubtisch 70 ist vorzugsweise horizontal orientiert und dient zur Aufnahme von Versandträgern, wie z.B. einer Versandpalette 72, die mittels der Hubeinrichtung 68 variabel nach oben und unten gefahren werden kann, wie es durch einen Doppelpfeil 74 angedeutet ist. Die Hubeinrichtung 68 ist auf einem (Höhen-)Niveau (Y-Achse) angeordnet, das unterhalb der Station 10 liegt. Die Station 10 kann auf einer Bühne 76 angeordnet sein, die im Bereich der Packstation 18 durchbrochen ist. Unterhalb der Bühne 76 kann eine Wickeleinrichtung 78 angeordnet sein, die die mit Stückgütern 27 bepackte Versandpalette 72 beim Absenken mit einer (Thermo-)Folie fest umwickelt, wie es durch einen Pfeil 80 angedeutet ist.

Die Lage der Handhabungsebene 58 kann so gewählt werden, dass die Ebene bündig mit einer Oberseite zumindest eines Teils der Gleitfläche 56 abschließt, der sich entlang der Packstation 18 erstreckt.

In Fig. 5 ist eine weitere Tablar-Handhabungsstation 10 mit einer Packstation 18 in perspektivischer Darstellung gezeigt. Man erkennt Komponenten des Lager- und Kommissioniersystems 100, insbesondere das Tablarlager 110 sowie zwei Vertikallifte 112.

Die Tablar-Fördertechnik 12 weist einen relativ komplexen Verlauf auf. Die Tablar-Fördertechnik 12 weist unter anderem zwei Drehtische 120 auf, die benötigt werden, um die Tablare 14 zwischen Linearabschnitten der Tablar-Fördertechnik 12 umzusetzen. Die Tablar-Fördertechnik 12 bildet zwischen den Liften 112 und der Tablar-Handhabungsstation 10 einen Fördertechnikkreisel aus. Der so gebildete Kreisel kann auch als Puffer für Tablare 14 dienen, die über die Lifte 112 ein- und ausgelagert werden.

Direkt vor dem Kommissionierer 20 ist in der Handhabungsposition 24 (vgl. Fig. 2) ein Tablar 14-1 gezeigt, das gegenüber der Horizontalen (XZ-Ebene) durch die Kippeinrichtung 42 (vgl. Fig. 2) geneigt ist. Die Stückgüter 27 sind auf dem Tablar 14-1 in Richtung des Kommissionierers 20 geneigt. Aufgrund der Schwerkraft können die Stückgüter 27 so leicht in Richtung des Kommissionierers 20 bewegt werden. Vorzugsweise rutschen die Stückgüter 27 von allein in Richtung des Kommissionierers 20. Der Kommissionierer 20 kann die so bereitgestellten Stückgüter 27 vom Tablar 14-1 über die Gleitflächeneinheit 26 in Richtung der Packstation 18 bewegen, deren Schachtöffnung in diesem Fall mit dem Abgabebereich 40 (vgl. Fig. 2) zusammenfällt. Die Schürze 54 und die Gleitfläche 56 der Gleitflächeneinheit 26 sind in diesem Fall so zueinander angeordnet, dass es keine in Richtung des Kommis sionierers 20 vorstehenden Kanten gibt. Die Gleitfläche 56 schließt ferner bündig mit einem oberen Rand der Packstation 18 ab. Der obere Rand der Packstation 18 läuft vorzugsweise vollständig um die Schachtöffnung herum und liegt in der XZ-Ebene. Dieser Rand kann als Ablage und Stapelhilfe dienen. Die Gleitfläche 56 stellt eine Art Verbreiterung oder Verlängerung des umlaufenden Rands der Packstation 18 dar.

Im Beispiel der Fig. 5 sind bereits vier Stückgüter 27, die nicht sortenrein sein müssen, in die Packstation 18 geladen worden. Diese vier Stückgüter 27-1 bis 27-4 stehen auf einer horizontal beweglichen (Zwischen-)Ablage 82, die Teil einer Versandträger-Austauschvorrichtung 84 ist, von der in der Fig. 5 ein horizontal orientierter Rahmen 86 zu erkennen ist. Die Ablage 82 befindet sich in der Normalstellung innerhalb des Rahmens 86 und kann beim Austausch eines beladenen Versandträgers gegen einen leeren Versandträger über die Schachtöffnung gefahren werden, um in eine Austauschstellung zu gelangen, wie es durch einen Pfeil 88 angedeutet ist. Sobald ein neuer, leerer Versandträger unterhalb der Ablage 82 positioniert ist, kann die Ablage 82 aus ihrer Austauschstellung zurück in ihre Normalstellung, d.h. in den Rahmen 86, zurückbewegt werden. Die vier Stückgüter 27-1 bis 27-4 fallen dann auf den leeren Versandträger (nicht dargestellt). Auf diese Weise ist gewährleistet, dass der Kommissionierer 20 selbst bei einem Austausch eines Versandträgers kontinuierlich, d.h. ohne Unterbrechung und Pause, weiterarbeiten kann. Dies steigert die Umsetzleistung des Kommissionierers 20 (umgesetzte Stückgüter 27/Stunde).

Die Tablar-Handhabungsstation 10 kann generell eine Anzeigeeinrichtung 90, wie z.B. einen (Computer-)Bildschirm, und gegebenenfalls auch eine Eingabevorrichtung 92, wie z.B. eine Tastatur oder Ähnliches, aufweisen. Über den Bildschirm, der vorzugsweise im direkten Blickfeld des Kommissionierers 20 angeordnet ist, wie es in der Fig. 5 durch zwei Pfeile angedeutet ist, können dem Kommissionierer 20 wichtige Informationen angezeigt werden, die er zum Handhaben der Stückgüter 27 benötigt. So können dem Kommissionierer 20 beispielsweise Fotos der Stückgüter 27 gezeigt werden, die er von dem Tablar 14-1 nehmen muss. Des Weiteren können dem Kommissionierer 20 Computergrafiken angezeigt werden, wie er das entnommene Stückgut 27-1 in der Packstation 18 anordnen muss, um einen Stückgutstapel fortzusetzen. Sollte es zu Fehlern oder unerwarteten Komplikationen kommen, kann der Kommissionierer 20 über die Eingabevorrichtung 92 mit einer übergeordneten Steuerung (z.B. Materialflussrechner, Lagerverwaltungs-Rechner, etc.) kommunizieren.

Die übergeordnete Steuerung ist unter anderem für einen Materialfluss innerhalb des Systems 100, und insbesondere für den Fluss der Tablare 14 von und zur Station 10, verantwortlich. Des Weiteren kann die übergeordnete Steuerung mittels Pack-Algorithmen und Pack-Software ein Packmuster auf dem Versandträger vorab berechnen. Durch diese Maßnahme wird der Kommissionierer 20 beim Packen entlastet. Der Kommissionierer 20 muss nicht mehr auf umständliche Weise testen, wie das gerade zu packende Stückgut 27 am besten auf den Stückgutstapel in der Packstation 18 passt. Auf diese Weise kann auch Zeit beim Packen gespart werden. Der Stückgutstapel kann so stabiler und kompakter gebildet werden. Die Pack-Algorithmen können auch eine Entladereihenfolge des Stückgutstapels am Zielort des Kunden berücksichtigen.

Die in der Fig. 5 gezeigte Tablar-Handhabungsstation 10 ist hoch ergonomisch. Der Kommissionierer 20 muss eigentlich nicht laufen, um die Stückgüter 27 von dem Tablar 14-1 zu nehmen und auf den Stückgutstapel in der Packstation 18 zu setzen. Der Kommissionierer 20 zieht die Stückgüter 27 in diesem Fall von links nach rechts über die Gleitflächeneinheit 26. Der Kommissionierer 20 muss die Stückgüter 27 nicht anheben. Der Kommissionierer 20 bekommt das Packmuster über den Bildschirm angezeigt, der wiederum mittig zwischen dem Tablar 14-1 und der Packstation 18 angeordnet ist. Die Stückgüter 27 werden vorzugsweise in Hüft- bis Bauchhöhe des Kommissionierers 20 bereitgestellt. Die Stückgüter 27 rutschen vorzugsweise selbstständig in den Arbeitsbereich 22 (vgl. Fig. 2 bis 4) des Kommissionierers 20, so dass sich der Kommissionierer 20 nicht strecken muss, um auch an die Stückgüter 27 zu gelangen, die - von dem Kommissionierer 20 aus betrachtet - in einem hinteren Bereich des Tablars 14-1 oder außerhalb des Arbeitsbereichs 22 sitzen.

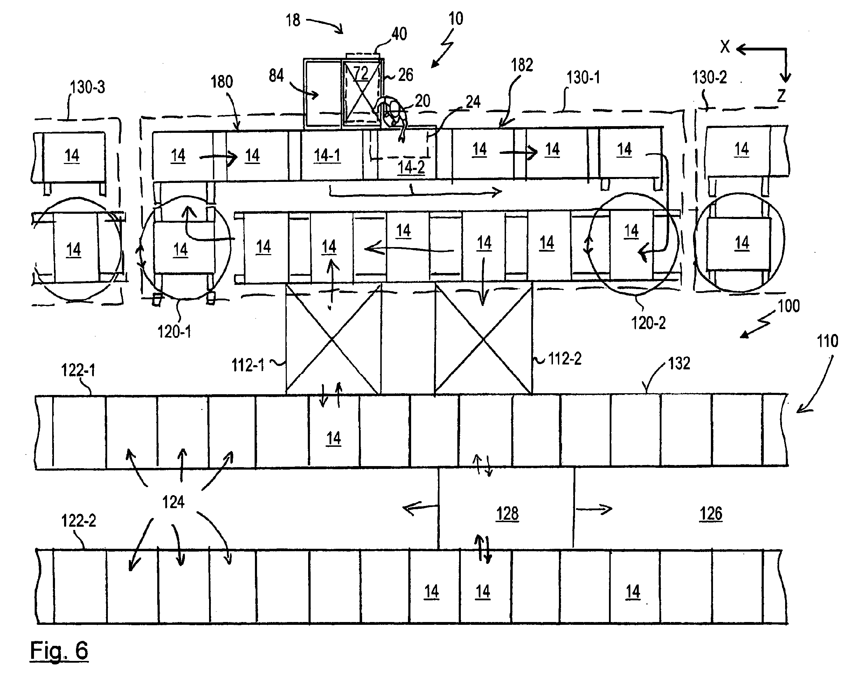

Fig. 6 zeigt eine Draufsicht auf ein System 100 mit einer weiteren Station 10 und einem Tablarlager 110.

Das Tablarlager 110 weist exemplarisch zwei Regale 122 auf, wobei in der Fig. 6 lediglich Einzelregale 122-1 und 122-2 gezeigt sind. Die Regale 122 weisen eine Vielzahl von Lagerplätzen 124 für die Tablare 14 auf. Die Lagerplätze 124 sind Matrix-förmig in Reihen und Spalten nebeneinander und übereinander angeordnet und werden über ein Regalbediengerät 128 mit Tablaren 14 versorgt. Das Regalbediengerät 128 fährt in einer Regalgasse 126, die zwischen den Regalen 122-1 und 122-2 in der Längsrichtung (X-Richtung) definiert ist. Das Regalbediengerät 128 kann an den Regalen 122 gelagert sein. Das Regalbediengerät 128 kann aber auch auf einem Hallenboden und/oder einer Hallendecke geführt sein. Ein Lastaufnahmemittel des Regalbediengeräts 128 ist zur Aufnahme und Abgabe von mehreren Tablaren 14 in der Querrichtung (z-Richtung) eingerichtet. Besondere Lagerplätze 124, die den Liften 112 gegenüberliegen, stellen so genannte Transferplätze dar, wo das Lastaufnahmemittel der Lifte 112 Tablare 14 mit dem Regal 122 in der Querrichtung Z tauscht. Der in der Fig. 6 links dargestellte Lift 112-1 befördert die Tablare 14 (ausschließlich) in der vertikalen Richtung auf ein Niveau der Tablar-Handhabungsstation 10 und gibt das Tablar 14 dann an die Tablar-Fördertechnik 12 ab, die im vorliegenden Fall vorzugsweise wieder in Form eines in sich geschlossenen Fördertechnikkreisels 130-1 vorgesehen ist. Der Fördertechnikkreisel 130-1 weist lineare Abschnitte und Drehtische 120 auf. Es versteht sich, dass der Fördertechnikkreisel 130-1, in Abhängigkeit von der Streckenführung, auch Kurvenabschnitte (nicht gezeigt) und/oder Gefälle und Steigungen (nicht gezeigt) aufweisen kann.

Die Tablare 14 werden dann vom (Auslagerungs-)Lift 112-1 zur Station 10 an die Handhabungsposition 24 transportiert, wo der Kommissionierer 20 eine gewünschte Anzahl von Stückgütern 27 entnimmt und über die Gleitflächeneinheit 26 in den Abgabebereich 40 bewegt, der eine Schachtöffnung der Packstation 18 überdeckt. Nach einer erfolgten Entnahme der Stückgüter 27, die vorzugsweise sortenrein auf den Tablaren 14 bereitgestellt werden, werden die entsprechenden Tablare 14 in Richtung des (Einlagerungs-)Lifts 112-2 transportiert. Die Tablare 14 können aber auch ein weiteres Mal kreiseln, sollten Stückgüter 27 erneut in einer anderen (Stapel-)Schicht auf der Versandpalette 72 benötigt werden. Es versteht sich, dass auch andere (Versand-)Ladehilfsmittel als Paletten eingesetzt werden können. So können z.B. Roll-Container, Kisten, Kartons, Behälter, Paletten unterschiedlicher Größen und dergleichen eingesetzt werden. Ferner kann jeder der Lifte 112 als Einlagerungslift und/oder als Auslagerungslift eingesetzt werden.

Ferner sind in der Fig. 6 zwei weitere Fördertechnikkreisel 130-2 und 130-3 gezeigt, die den Fördertechnikkreisel 130-1 zwischen sich einschließen. Es können beliebig viele Stationen 10 mit zugehörigen Tablar-Fördertechniken 12 nebeneinander entlang einer Längsseite 132 des Tablarlagers 110 angeordnet werden.

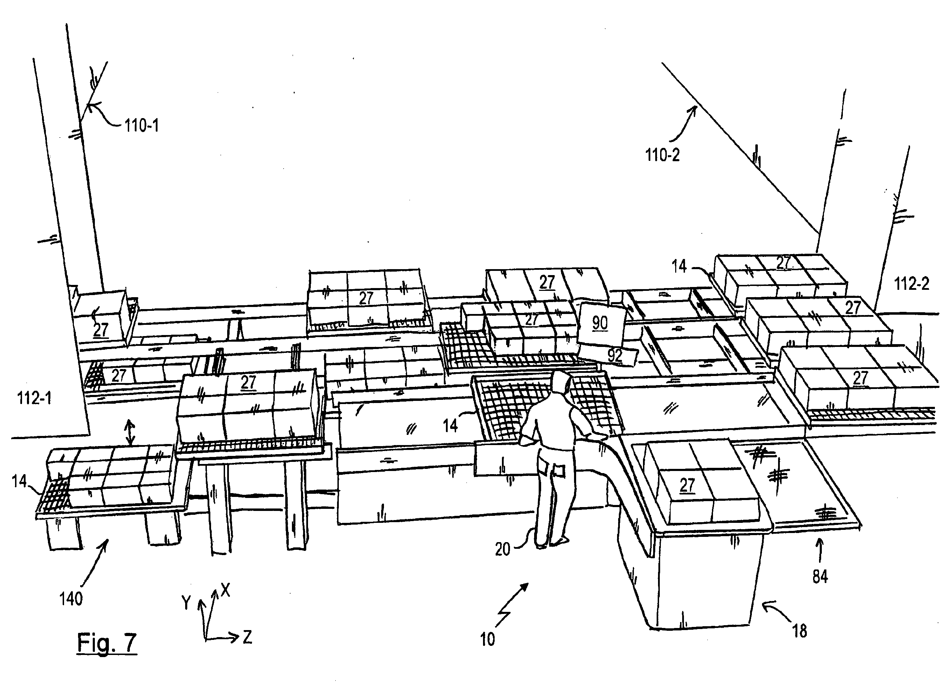

Alternativ können die Stationen 10 aber auch in der Querrichtung (Z-Richtung) zwischen zwei benachbarten Tablarlagern 110-1 und 110-2 angeordnet werden, wie es exemplarisch in Fig. 7 in einer perspektivischen Ansicht gezeigt ist, bei der man in eine Gasse blickt, die sich zwischen zwei Tablarlagern 110-1 und 110-2 in der Längsrichtung (X-Richtung) erstreckt. Ein Vorteil dieser Art der Anordnung ist, dass an der Station 10 auf ein Stückgut-Sortiment aus zwei verschiedenen Tablarlagern 110-1 und 110-2 zugegriffen werden kann.

Die Tablar-Fördertechnik 12 kann in zwei übereinanderliegenden Ebenen vorgesehen sein. Jeder Ebene kann einer der Lifte 112-1 und 112-2 zugeordnet sein. Eine der Ebenen dient vorzugsweise der Bereitstellung von Tablaren 14, von denen Stückgüter 27 entnommen werden sollen. Die andere Ebene dient vorzugsweise dem Rücktransport von Tablaren 14, die bereits bearbeitet wurden. Es versteht sich, dass der Materialfluss auch umgekehrt verlaufen oder durchmischt sein kann.

Um Tablare 14 zwischen den beiden Ebenen austauschen zu können, sind weitere Fördertechnikkomponenten vorgesehen, wie z.B. ein Heber 140, der in der Fig. 7 exemplarisch in der linken unteren Ecke gezeigt ist.

Es versteht sich, dass die Tablare 14 dem Kommissionierer 20 nicht nur über horizontal angeordnete Kreisel angedient werden können, sondern auch über vertikal orientierte Fördertechnikkreisel. Die vertikal orientierten Kreisel können zwischen zwei benachbarten Tablarlagern 110 angeordnet sein, wie es exemplarisch in der Fig. 7 gezeigt ist. Alternativ können die Vertikalkreisel auch parallel zur Längsseite 132 eines oder mehrerer Tablarlager 110 angeordnet sein, wie es exemplarisch in der Fig. 6 gezeigt ist.

In den Fig. 8 bis 10 sind mehrere Varianten einer Kippeinrichtung 42 gezeigt.

Fig. 8 zeigt eine erste Kippeinrichtung 42-1, die eine Vielzahl von Rollen 152 aufweist, die wiederum durch entsprechende Ausnehmungen in Tablarböden greifen können, wie es durch einen Pfeil 154 angedeutet ist. Die Rollen 152 können in der vertikalen Richtung (Y-Richtung), vorzugsweise variabel, ein- und ausgefahren werden. Insbesondere können die Rollen 152 entlang einer imaginären Ebene 156 orientiert sein, die gegenüber der Hauptförderebene 64 geneigt ist (vgl. Winkel α). Die Ebene 156 ist vorzugsweise so geneigt, dass Stückgüter 27 (nicht dargestellt) auf den Rollen 152 über die Oberkante 60 des Tablars 14 bewegt werden können, ohne dass der Kommissionierer 20 (nicht gezeigt), der im Beispiel der Fig. 8 rechts neben dem Tablar 14 steht, diese Stückgüter 27 über den Rand 62 des Tablars 14 heben muss.

Bei der Kippeinrichtung 42-2, die in Fig. 9 gezeigt ist, ist mindestens ein Fingerelement 160 vorgesehen, das in einem Bereich des Rands 62 um eine Achse 161 schwenkbar ist, wie es durch einen Pfeil 162 angedeutet ist. Üblicherweise werden mehrere Fingerelemente 160 in der X-Richtung hintereinander angeordnet und synchron betätigt, um dem Kommissionierer 20 (nicht gezeigt) die Entnahme eines Stückguts 27 (nicht gezeigt) aus dem Tablar 14 zu erleichtern. In einer ausgefahrenen Stellung, wie sie in der Fig. 9 gezeigt ist, reicht eine imaginäre Verlängerung der Oberfläche des Fingerelements 160 über die Oberkante 60 des Rands 62 des Tablars 14 hinaus. In einer eingefahrenen Stellung können die Tablare 14 in der X-Richtung verfahren werden.

In der Fig. 10 ist eine weitere Abwandlung einer Kippeinrichtung 42-3 gezeigt, die ähnlich wie die in der Fig. 9 gezeigte Kippeinrichtung 42-2 aufgebaut ist.

Zusätzlich zu dem Fingerelement 160 werden bei der Kippeinrichtung 42-3 ein oder mehrere Hubstifte 170 in einem dem Fingerelement 160 gegenüberliegenden Bereich des Tablars 14, vorzugsweise parallel zur Y-Richtung, ein- und ausgefahren. Mit dem Hubstift 170 wird das Tablar 14 selbst zum Kommissionierer 20 hin geneigt, wie es durch einen Winkel β angedeutet ist.

Sowohl der Winkel α als auch der Winkel β können Stückgut und/oder Tablar-abhängig eingestellt werden. Unterschiedlich große Winkel lassen sich beliebig einstellen.

Es versteht sich, dass das Fördermittel, hier die Riemen 36, der Tablar-Fördertechnik 12 auch direkt auf den Hubstiften 170 angeordnet sein kann, um die Tablare 14 in einer Schrägstellung an der Tablar-Handhabungsstation 10 (getaktet) vorbeizuführen.

Es versteht sich, dass anstatt der einfahrenden Hilfen gemäß den Elementen 150 oder 160 auch ein händisch oder mechanisch betätigbare Rutsche 170 eingesetzt werden kann, wie sie exemplarisch in Fig. 11 gezeigt ist. Die Rutsche 170 ist mit einem Drehlager 172 um eine Achse 174 drehbar gelagert. In Fig. 11 ist eine erste Endstellung gezeigt, bei die Rutsche 170 in das Tablar 14 hinein ragt. In einer zweiten, nicht dargestellten Endstellung, kann die Rutsche 170 auf der Gleitfläche 56 ruhen, um einen Austausch eines Tablars 14 zu ermöglichen. In dieser zweiten Endstellung wird die Rutsche um mehr als 180° verschwenkt. Andere, kleinere Winkel sind möglich, solange die Rutsche 170 bei einem Tablartausch nicht mit dem Tablar 14 kollidiert. Das Verschwenken zwischen den beiden Endstellungen kann automatisiert mittels einer nicht dargestellten Schwenkkulisse erfolgen, die durch einen Tablarwechsel betätigt wird. In diesem Fall befindet sich die Rutsche 170 immer dann in der zweiten Endstellung, wenn ein Tablarwechsel stattfindet.

Zurückkehrend zu Fig. 6 ist vor der Station 10 eine Ankippeinrichtung 180 und nach der Station 10 eine Rückkippeinrichtung 182 vorgesehen, die nach Art der in Fig. 10 beschriebenen Weise die Tablare 14 zum Kommissionierer 20 hin neigen bzw. die Tablare 14 anschließend wieder zurück in die Hauptförderebene 64 schwenken. Vorzugsweise wird die Tablar-Fördertechnik 12 in einem Bereich schräggestellt, der mindestens zwei Tablare 14 aufnehmen kann und unmittelbar an die Station 10 angrenzt. In der Fig. 6 befinden sich die Tablare 14-1 und 14-2 in diesem Bereich. Dieser Bereich überlappt sich mit der Handhabungsposition 24. Vorzugsweise werden mindestens zwei Tablare 14 gemeinsam umgesetzt, um das oder die Tablare 14 an der Handhabungsposition 24 auszutauschen.

Es versteht sich, dass die oben stehenden Erläuterungen zur Entnahme eines Stückguts 27 und zum Packen dieser Stückgüter 27 auf einen Versandträger oder zum Umsetzen auf eine Stückgut-Fördertechnik 16 auch in umgekehrter Richtung gelten. So können z.B. Stückgüter 27 (individuell) über die Stückgut-Fördertechnik 16 der Station 10 zugeführt werden. Stückgutstapel auf Ladungsträgern können über die Packstation 18 zugeführt werden. Die so zugeführten Stückgüter 27 können dann vom Kommissionierer 20 manuell auf die Tablare 14 umgesetzt werden, wobei der Kommissionierer 20 die Stückgüter 27 über die Gleitflächeneinheit 26 bewegt. Die Gleitflächeneinheit 26 ist in diesen Fällen meistens geradflächig ausgelegt, d.h. sie weist weder Hebungen noch Senkungen auf, damit die Stückgüter 27 in beiden Richtungen (Ent- und Beladen) über die Gleitfläche 56 bewegt werden können.

Ferner versteht es sich, dass die Tablare 14 nicht sortenrein mit Stückgütern 27 beladen sein müssen oder beladen werden müssen. Auch die Versand träger können mit unterschiedlichen Stückguttypen beladen sein oder beladen werden. Man spricht in diesem Zusammenhang häufig von "mixed pallets", wenn Paletten als Versandträger eingesetzt werden. Selbstverständlich können aber auch sortenreine Tablare 14 sowie sortenreine Versandträger an der Station 10 be- und entladen werden.

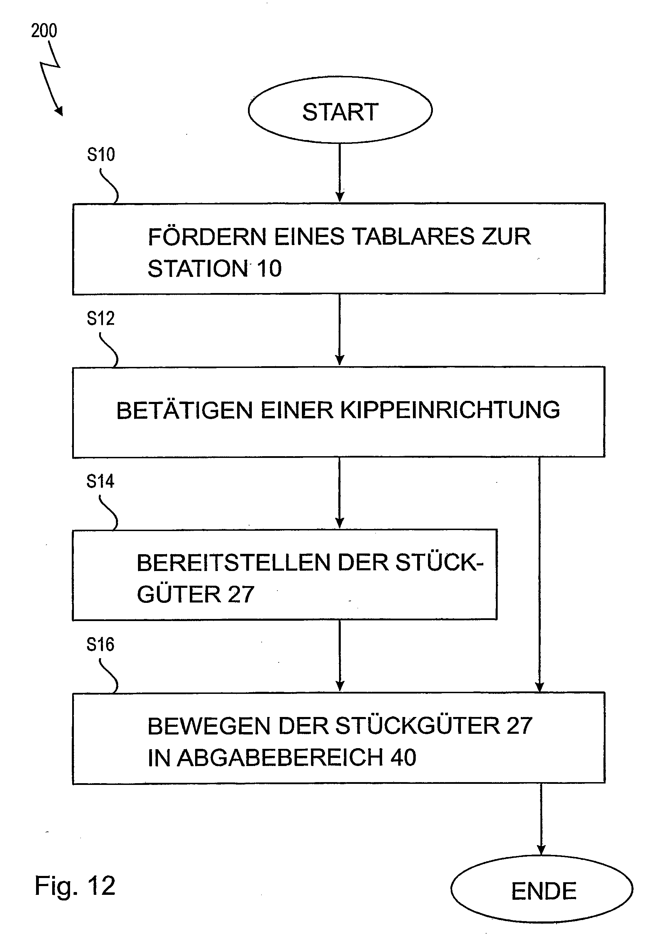

Bezug nehmend auf Fig. 12 wird nachfolgend ein Verfahren 200 zum Be- oder Entladen eines Stückguts 27 auf ein oder von einem Tablar 14 beschrieben.

In einem ersten Schritt S10 werden zu handhabende Tablare 14 zur Tablar-Handhabungsstation 10, und insbesondere in die Handhabungsposition 24, gefördert. In einem Schritt S12 kann eine Kippeinrichtung 42 betätigt werden, um entweder das Tablar 14 und/oder die Stückgüter 27 schrägzustellen. Die zu handhabenden Stückgüter 27 werden entweder bereits in Schritt S12 durch die Bereitstellung des Tablars 14 oder separat in einem Schritt S14 bereitgestellt, z.B. wenn die Tablare 14 beladen werden sollen. In einem Schritt S16 werden die Stückgüter 27 über die Gleitfläche 56 der Gleitflächeneinheit 26 in den Abgabebereich 40 bewegt. Die Bewegung erfolgt durch Ziehen und/oder Schieben der Stückgüter 27, und zwar ohne dass die Stückgüter 27 dazu angehoben werden müssen. Es versteht sich, dass beim Beladen von Tablaren 14 der Abgabebereich 40 mit der Handhabungsposition 24 überlappt.

Außerdem ist es auch möglich, ergänzend oder alternativ, stromaufwärts relativ zur Kippeinrichtung 42 einen Schieber oder funktionsähnliche Elemente, wie z.B. einen Entladevorrichtung für Tablare gemäß der DE 10 2006 039 679 A1 einzusetzen, die Stückgüter, die auf den Tablaren bereitgestellt werden, vorba in eine ergonomisch günstige Position auf dem Tablar anordnen, damit sich der Kommissionierer möglichst wenig bewegen muss. Vorzugsweise werden die Stückgüter dann in Richtung des Kommissionierers geschoben.

Bei der Wahl der Orientierungsrichtungen wurde sich generell in der oben stehenden Beschreibung an die in der Lagerlogistik üblichen Bezeichnungen gehalten, so dass die (horizontale) Länge entlang einer Längsseite eines Regals mit X, die Tiefe eines Regals mit Z und die (vertikale) Höhe eines Regals mit Y bezeichnet wurde.

Des Weiteren wurden in der vorhergehenden Beschreibung der Erfindung gleiche Teile und Merkmale mit gleichen Bezugszeichen versehen, wobei die in der gesamten Beschreibung enthaltenen Offenbarungen sinngemäß auf gleiche Teile und Merkmale mit gleichen Bezugszeichen übertragen werden können. Lage- und Orientierungsangaben, wie z.B. "oben", "unten", "seitlich", "längs", "quer", "horizontal", "vertikal" und Ähnliches, sind auf die unmittelbar beschriebene Figur bezogen und bei einer Lage- bzw. Orientierungsänderung sinngemäß auf die neue Lage bzw. Orientierung zu übertragen.

## Patentansprüche

1. Tablar-Handhabungsstation (10) zum manuellen Be- oder Entladen von Stückgütern (27) auf ein oder von einem Tablar (14), wobei die Tablar-Handhabungsstation (10) an eine Packstation (18) oder an eine Stückgut-Fördertechnik (16) gekoppelt ist, mit:
einer Tablar-Fördertechnik (12), die eine Handhabungsposition (24) zur Zwischenspeicherung von zumindest einem zu handhabenden Tablar (14) aufweist;
einem Arbeitsbereich (22), der die Handhabungsposition (24) und die Packstation (18) oder die Stückgut-Fördertechnik (16) zumindest teilweise einschließt; **gekennzeichnet durch**
eine ergonomisch geformte und angeordnete Gleitflächeneinheit (26), die mit dem zu handhabenden Tablar (14-1, 14-2), insbesondere mit einer Oberkante (60) davon, eine Handhabungsebene (58) definiert, die an die Tablar-Fördertechnik (12) angrenzt und die an die Packstation (18) oder die Stückgut-Fördertechnik (16) angrenzt;
wobei der Arbeitsbereich (22) so dimensioniert ist, dass ein Kommissionierer (20) bei einer Entnahme eines Stückguts (27) von dem zu handhabenden Tablar (14-1, 14-2), das sich auf der als Entnahmeposition dienenden Handhabungsposition (24) befindet, das zu entnehmende Stückgut (27) allein durch eine Bewegung seines Oberkörpers von dem zu handhabenden Tablar (14-1, 14-2) über eine Gleitfläche (56) der Gleitflächeneinheit (26), die in der Handhabungsebene (58) liegt, ohne Heben in einen Abgabebereich (40) bewegt, der im Arbeitsbereich (22) liegt und der die Packstation (18) oder die Stückgut-Fördertechnik (16) zumindest teilweise überlappt; und
wobei vorzugsweise eine Kippeinrichtung (42) vorgesehen ist, die das zu handhabende Tablar (14-1, 14-2) oder das zu entnehmende Stückgut (27) derart relativ zu einer im Wesentlichen horizontal orientierten Hauptförderebene (64) neigt, dass der Kommissionierer (10) das zu entnehmende Stückgut (27) über die Gleitfläche (56) der Gleitflächeneinheit (26) im Wesentlichen stufenlos von dem zu handhabenden Tablar (14-1, 14-2) in den Abgabebereich (40) schieben und/oder ziehen kann.

2. Tablar-Handhabungsstation (10) nach Anspruch 1, wobei eine Kippeinrichtung (42) eine Ankippeinrichtung (180) und eine Rückkippeinrichtung (182) aufweist, die in die Tablar-Fördertechnik (12) derart integriert sind, dass sie vorzugsweise stromaufwärts und stromabwärts relativ zur Handhabungsposition (24) angeordnet sind.

3. Tablar-Handhabungsstation (10) nach Anspruch 2, wobei der Boden des zu handhabenden Tablars (14) derart gegenüber der Hauptförderebene (64) geneigt ist, dass die Stückgüter (27) zu dem Kommissionierer (20) hin rutschen können.

4. Tablar-Handhabungsstation (10) nach Anspruch 3, wobei die Kippeinrichtung ferner eine heb- und senkbare Rampe (160) aufweist, die das zu handhabende Tablar (14) derart durchgreift und die entgegengesetzt zum Tablarboden geneigt ist.

5. Tablar-Handhabungsstation (10) nach Anspruch 1, wobei die Kippeinrichtung (42-1) eine Rollenanordnung (150) aufweist, die eine Transportebene (156) definiert und die einen Boden des zu handhabenden Tablars (14) derart durchgreift, dass die Transportebene (156) gegenüber der Hauptförderebene (64) geneigt ist.

6. Tablar-Handhabungsstation (10) nach einem der vorhergehenden Ansprüche, wobei die Gleitflächeneinheit (26) bündig an die Tablar-Fördertechnik (12) und an die Stückgut-Fördertechnik (16) oder Packstation (18) koppelt.

7. Tablar-Handhabungsstation (10) nach einem der vorhergehenden Ansprüche, wobei die Gleitflächeneinheit (26) zwei Schenkel aufweist, die einen Winkel von ungefähr 10° bis ungefähr 170° einschließen.

8. Tablar-Handhabungsstation (10) nach einem der vorhergehenden Ansprüche, wobei die Gleitflächeneinheit (26) eine Schürze (54) aufweist, die im Wesentlichen vertikal orientiert ist und die vorzugsweise bündig mit einer Kante der Gleitfläche (56) abschließt, die dem Kommissionierer (20) zugewandt ist.

9. Tablar-Handhabungsstation (10) nach einem der vorhergehenden Ansprüche, wobei die Gleitfläche (56) von der Tablar-Fördertechnik (12) in Richtung der Stückgut-Fördertechnik (16) oder der Packstation (18) abfällt.

10. Tablar-Handhabungsstation (10) nach einem der vorhergehenden Ansprüche, wobei die Tablar-Fördertechnik (12) zumindest im Arbeitsbereich (22) getaktet fortbewegt wird und wobei die Handhabungsposition (24) durch einen Abschnitt der Tablar-Fördertechnik (12) definiert ist, wo das zu handhabende Tablar (14) während einer Entnahme oder Abgabe eines Stückguts (27) in Ruhe ist.

11. Tablar-Handhabungsstation (10) nach einem der vorhergehenden Ansprüche, wobei jedes Tablar (14) einen umlaufenden Rand (62) hat, so dass Stückgüter (27) nicht seitlich von einer Transportfläche des Tablars (14) rutschen.

12. Tablar-Handhabungsstation (10) nach einem der vorhergehenden Ansprüche, wobei jedes Tablar (14) zur Aufnahme einer Palettenlage oder einer Palettenreihe von Stückgütern eingerichtet ist.

13. Lager- und Kommissioniersystem (100) mit einem Tablarlager (110) und einer Tablar-Handhabungsstation (10) nach einem der vorhergehenden Ansprüche.

14. Verfahren (200) zum Be- oder Entladen eines Stückguts (27) auf ein oder von einem Tablar (14) in einem Lager- und Kommissioniersystem (100) mit einer Tablar-Handhabungsstation (10), vorzugsweise gemäß einem der Ansprüche 1 bis 12, das die folgenden Schritte aufweist:
Fördern (S10) eines zu handhabenden Tablars (14), das mit zu handhabenden Stückgütern (27) beladen ist, zu einer Handhabungsposition (24) einer Tablar-Fördertechnik (12);
Bereitstellen eines der zu handhabenden Stückgüter (27) innerhalb eines Arbeitsbereichs (22) eines Kommissionierers (20), so dass der Kommissionierer (20) das Stückgut (27) nur durch eine Bewegung seines Oberkörpers ohne Heben umsetzen kann;
vorzugsweise Betätigen einer Kippeinrichtung (42), um das zu handhabende Tablar (14) oder das Stückgut (27) schräg zu stellen;
Entnehmen des Stückguts (27) von dem zu handhabenden Tablar (14); und
Ziehen und/oder Schieben des Stückguts über eine Gleitfläche (56) einer Gleitflächeneinheit (26) in einen Abgabebereich (40), der im Arbeitsbereich (22) liegt und der eine Packstation (18) oder eine Stückgut-Fördertechnik (16) zumindest teilweise überlappt, wobei das Ziehen und/oder Schieben in einer stufenlosen Handhabungsebene (58) erfolgt.

## Claims

1. A tray-handling station (10) for manually loading or unloading piece goods (27) on or from a tray (14), wherein the tray-handling station (10) is couplable to a packing station (18), or a piece-good conveyor system (16), comprising:
a tray-conveyor system (12) comprising a handling position (24) for buffering at least one tray (14), which is to be handled;
a working area (22) including at least partially the packing station (18), or the piece-good conveyor system (16), and the handling position (24); and
an ergonomically shaped and arranged sliding-surface unit (26) defining a handling plane (58) together with the to-be-handled tray (14-1, 14-2), particularly together with an upper edge (60) thereof, the handling plane (58) being arranged adjacent to the tray-conveyor system (12) and adjacent to the packing station (18), or the piece-good conveyor system (16);
wherein the working area (22) is dimensioned such that an order-picking person (20) moves, during removal of one of the piece goods (27) from the to-be-handled tray (14-1, 14-2) located at the handling position (24) which serves as removal position, the to-be-removed piece good (27) from the to-be-handled tray (14-1, 14-2) via a sliding surface (56) of the sliding surface unit (26), which is located in the handling plane (58), to a discharging area (40), which is located within the working area (22) and which, at least partially, overlaps the packing station (18) or the piece-good-conveyor system (16), only by moving his/her upper body without lifting; and
wherein preferably a tilting device (42) is provided, which tilts the to-be-handled tray (14-1, 14-2), or the to-be-removed piece good (27), relative to a substantially horizontally orientated main-conveying plane (64) such that the order-picking person (10) can push and/or pull the to-be-removed piece good (27) over the sliding surface (56) of the sliding-surface unit (26) in a substantially stepless manner from the to-be-handled tray (14-1,14-2) into the discharging area (40).

2. The tray-handling station (10) of claim 1, wherein a tilting device (42) comprises a tilting device (180) and a tilting-back device (182), which are integrated into the tray-conveyor system (12) such that they are arranged preferably upstream and downstream relative to the handling position (24).

3. The tray-handling station (10) of claim 2, wherein a bottom of the to-be-handled tray (14) is tilted relative to the main-conveying plane (64) such that the piece goods (27) can slip towards the order-picking person (20).

4. The tray-handling station (10) of claim 3, wherein the tilting device further comprises a ramp (160), which can be lifted and lowered, reaching through the to-be-handled tray (14) and being tilted opposite to the bottom of the tray.

5. The tray-handling station (10) of claim 1, wherein the tilting device (42-1) comprises an array (150) of rollers, which defines a transport plane (156) and which reaches through a bottom of the to-be-handled tray (14) such that the transport plane (156) is tilted relative to the main-conveying plane (64).

6. The tray-handling station (10) of one of the preceding claims, wherein the sliding-surface unit (26) is flush-coupled to the tray-conveyor system (12) and to the piece-good conveyor system (16), or the packing station (18).

7. The tray-handling station (10) of one of the preceding claims, wherein the sliding-surface unit (26) comprises two legs, which enclose an angle of about 10° to about 170°.

8. The tray-handling station (10) of one of the preceding claims, wherein the sliding-surface unit (26) comprises a skirt (54), which is substantially orientated vertically sand preferably ends in a flush manner with an edge of the sliding surface (56) which faces the order-picking person (20).

9. The tray-handling station (10) of one of the preceding claims, wherein the sliding surface (56) decreases from the tray-conveyor system (12) towards the piece-good conveyor system (16), or the packing station (18).

10. The tray-handling station (10) of one of the preceding claims, wherein the tray-conveyor system (12) is moved in a clocked manner, at least within the working area (22), and wherein the handling position (24) is defined by a section of the tray-conveyor system (12), where the to-be-handled tray (14) rests during removal or delivery of one of the piece goods (27).

11. The tray-handling station (10) of one of the preceding claims, wherein each of the trays (14) has a circumferential rim (62) so that the piece goods (27) cannot slip-off laterally from the transport area of the tray (14).

12. The tray-handling station (10) of one of the preceding claims, wherein each of the trays (14) is adapted to receive one pallet layer, or pallet row, of piece goods.

13. A storage and order-picking system (100) having a tray store (110) and a tray-handling station (10) in accordance with one of the preceding claims.

14. A method (200) for loading or unloading a piece good (27) on or from a tray (14) in a storage and order-picking system (100) having a tray-handling station (10), preferably in accordance with one of the claims 1 to 12, comprising the steps of:
conveying (S10) a to-be-handled tray (14), which is loaded with to-be-handled piece goods (27), to a handling position (24) of a tray-conveyor system (12);
providing a to-be-handled piece good (27) within a working area (22) of an order-picking person (20) so that the order-picking person (20) can transfer the piece good (27) only by moving his/her upper body without lifting;
preferably actuating a tilting device (42) for orientating obliquely the to-be-handled tray (14), or piece good (27);
removing the piece good (27) from the to-be-handled tray (14); and
pulling and/or pushing the piece good over a sliding surface (56) of a sliding-surface unit (26) to a discharging area (40) located within the working area (22) and at least partially overlapping a packing station (18) or a piece-good conveyor system (16), wherein step of pulling and/or pushing occurs in a stepless handling plane (58).

## Revendications

1. Poste de manutention de tablettes (10) pour le chargement ou le déchargement manuel d'articles (27) sur une tablette ou depuis une tablette (14), le poste de manutention de tablettes (10) étant accouplé à un poste d'emballage (18) ou à un système de transport d'articles (16), comprenant :
un système de transport de tablettes (12), qui présente une position de manutention (24) pour le stockage intermédiaire d'au moins une tablette à traiter (14) ;
une zone de travail (22) qui inclut au moins en partie la position de manutention (24) et le poste d'emballage (18) ou le système de transport d'articles (16), **caractérisé par**
une unité de surface de glissement (26) formée et disposée de manière ergonomique, laquelle définit avec la tablette à traiter (14-1, 14-2), en particulier avec un bord supérieur (60) de celle-ci, un plan de manutention (58) qui est adjacent au système de transport de tablettes (12) et qui est adjacent au poste d'emballage (18) ou au système de transport d'articles (16) ;
la zone de travail (22) étant dimensionnée de telle sorte qu'un chariot de préparation des commandes (20), lors du prélèvement d'un article (27) de la tablette à traiter (14-1, 14-2) qui se trouve sur la position de manutention (24) servant de position de prélèvement, déplace l'article à prélever (27) uniquement par un déplacement de son corps supérieur depuis la tablette à traiter (14-1, 14-2) sur une surface de glissement (56) de l'unité de surface de glissement (26), qui est située dans le plan de manutention (58), sans soulèvement dans une zone de dépose (40), qui se situe dans la zone de travail (22) et qui chevauche au moins en partie le poste d'emballage (18) ou le système de transport d'articles (16) ; et
de préférence un dispositif de basculement (42) étant prévu, lequel incline la tablette à traiter (14-1, 14-2) ou l'article à prélever (27) par rapport à un plan de transport principal (64) orienté essentiellement horizontalement, de telle sorte que le chariot de préparation des commandes (20) puisse pousser et/ou tirer l'article à prélever (27) sur la surface de glissement (56) de l'unité de surface de glissement (26) essentiellement en continu depuis la tablette à traiter (14-1, 14-2) jusque dans la région de déchargement (40).

2. Poste de manutention de tablettes (10) selon la revendication 1, dans lequel un dispositif de basculement (42) présente un dispositif de basculement vers l'avant (180) et un dispositif de basculement vers l'arrière (182), lesquels sont intégrés dans le système de transport de tablettes (12) de telle sorte qu'ils soient disposés de préférence en amont et en aval par rapport à la position de manutention (24).

3. Poste de manutention de tablettes (10) selon la revendication 2, dans lequel le fond de la tablette (14) à traiter est incliné par rapport au plan de transport principal (64) de telle sorte que les articles (27) puissent glisser vers le chariot de préparation des commandes (20).

4. Poste de manutention de tablettes (10) selon la revendication 3, dans lequel le dispositif de basculement présente en outre une rampe (160) pouvant être levée et abaissée, qui vient en prise à travers la tablette à traiter (14) et qui est inclinée à l'opposé par rapport au fond de la tablette.

5. Poste de manutention de tablettes (10) selon la revendication 1, dans lequel le dispositif de basculement (42-1) présente un agencement à rouleaux (150) qui définit un plan de transport (156) et qui vient en prise à travers un fond de la tablette à traiter (14) de telle sorte que le plan de transport (156) soit incliné par rapport au plan de transport principal (64).

6. Poste de manutention de tablettes (10) selon l'une quelconque des revendications précédentes, dans lequel l'unité de surface de glissement (26) s'accouple en affleurement au système de transport de tablettes (12) et au système de transport d'articles (16) ou au poste d'emballage (18).

7. Poste de manutention de tablettes (10) selon l'une quelconque des revendications précédentes, dans lequel l'unité de surface de glissement (26) présente deux branches qui forment un angle d'environ 10° à environ 170°.

8. Poste de manutention de tablettes (10) selon l'une quelconque des revendications précédentes, dans lequel l'unité de surface de glissement (26) présente une jupe (54) qui est orientée essentiellement verticalement et qui se termine de préférence en affleurement avec une arête de la surface de glissement (56) qui est tournée vers le chariot de préparation des commandes (20).

9. Poste de manutention de tablettes (10) selon l'une quelconque des revendications précédentes, dans lequel la surface de glissement (56) descend du système de transport de tablettes (12) dans la direction du système de transport d'articles (16) ou du poste d'emballage (18).

10. Poste de manutention de tablettes (10) selon l'une quelconque des revendications précédentes, dans lequel le système de transport de tablettes (12) est avancé de manière cadencée au moins dans la zone de travail (22) et dans lequel la position de manutention (24) est définie par une portion du système de transport de tablettes (12) dans laquelle la tablette à traiter (14) est au repos pendant un prélèvement ou un déchargement d'un article (27).

11. Poste de manutention de tablettes (10) selon l'une quelconque des revendications précédentes, dans lequel chaque tablette (14) présente un bord périphérique (62) de telle sorte que des articles (27) ne glissent pas latéralement depuis une surface de transport de la tablette (14).

12. Poste de manutention de tablettes (10) selon l'une quelconque des revendications précédentes, dans lequel chaque tablette (14) est prévue pour recevoir une couche de palettes ou une rangée de palettes d'articles.

13. Système d'entreposage et de préparation des commandes (100) comprenant un entrepôt de tablettes (110) et un poste de manutention de tablettes (10) selon l'une quelconque des revendications précédentes.

14. Procédé (200) pour le chargement ou le déchargement d'un article (27) sur une tablette ou depuis une tablette (14) dans un système d'entreposage et de préparation des commandes (100) comprenant un poste de manutention de tablettes (10), de préférence selon l'une quelconque des revendications 1 à 12, présentant les étapes suivantes :
transporter (S10) une tablette à traiter (14) qui est chargée d'articles à traiter (27) jusqu'à une position de manutention (24) d'un système de transport de tablettes (12) ;
fournir l'un des articles à traiter (27) à l'intérieur d'une zone de travail (22) d'un chariot de préparation des commandes (20) de telle sorte que le chariot de préparation des commandes (20) puisse déplacer l'article (27) uniquement par un déplacement de son corps supérieur sans soulèvement ;
de préférence actionner un dispositif de basculement (42) pour incliner obliquement la tablette à traiter (14) ou l'article (27) ;
prélever l'article (27) de la tablette à traiter (14) ; et
tirer et/ou pousser l'article sur une surface de glissement (56) d'une unité de surface de glissement (26) dans une zone de déchargement (40) qui est située dans la zone de travail (22) et qui chevauche au moins en partie un poste d'emballage (18) ou un système de transport d'articles (16), la traction et/ou la poussée s'effectuant dans un plan de manutention continu (58).
